# EUROPÄISCHE PATENTSCHRIFT

(11) **EP 2 578 518 B1**
(45) Veröffentlichungstag und Bekanntmachung des Hinweises auf die Patenterteilung: **01.10.2014**
(21) Anmeldenummer: 12180372.0
(22) Anmeldetag: 14.08.2012
(51) Int. Cl.: B65G 25/08

(54) **Fördereinrichtung zum Transport von Schüttgut**
Conveyor device for transporting bulk goods
Dispositif de transport destiné au transport de produits en vrac

(30) Priorität: 05.10.2011 DE 102011084060
(43) Veröffentlichungstag der Anmeldung: 10.04.2013
(73) Patentinhaber: Vecoplan AG, 56470 Bad Marienberg (DE)
(72) Erfinder: Lipowski, Wolfgang, 56479 Seck (DE)
(74) Vertreter: Lippert, Stachow & Partner

(56) Entgegenhaltungen:
- EP-A1- 0 257 462
- DE-U1- 9 114 383
- DE-U1-202007 009 040
- DE-U1-202009 011 482
- FR-A1- 2 343 672
- US-A- 2 756 869

## Beschreibung

Die Erfindung betrifft eine Fördereinrichtung zum Transport von Schüttgut, umfassend zumindest einen Förderstrang, welcher eine Mehrzahl von in Förderrichtung hintereinander angeordneten und miteinander in Wirkverbindung stehenden Mitnehmern aufweist, wobei der zumindest eine Förderstrang über eine Bodenfläche in Bezug auf die Förderrichtung hin- und herbewegbar ist, und ein Mitnehmer eine Oberseite sowie eine Unterseite aufweist, wobei die Unterseite eine Auflagefläche bereitstellt, mit welcher der Mitnehmer auf der Bodenfläche auflegbar ist und die Oberseite des Mitnehmers an einem Längsende desselben zumindest eine Förderfläche zum Fördern des Schüttgutes in Förderrichtung umfasst, und die vertikale Erstreckung des Mitnehmers in Längsrichtung zu seiner Förderseite hin zumindest abschnittsweise zunimmt. Dabei weist ein Mitnehmer eine pfeilförmige Gestalt auf, wobei die vertikale Erstreckung eines Mitnehmers an seiner Förderseite über einen überwiegenden Bereich seiner Quererstreckung abnimmt.

Eine Fördereinrichtung ist beispielsweise in der Gebrauchsmusterschrift DE 20 2005 017 357 U1 beschrieben. Eine derartige Vorrichtung kann zum Austragen eines beliebigen Schüttgutes umfassend beispielsweise Holzhackschnitzel, Sägemehl, Hobelspäne, Rindenstücke, vorgebrochenes Altholz, Ersatzbrennstoffe und/oder Biomasse aus einem Lagerbereich wie z.B. einer Lagerhalle, einer Lagerbox oder einem Silo eingesetzt werden. Durch die Gestaltung der Mitnehmer wird das zu fördernde Material zunächst an der der Förderseite gegenüber liegenden Seite über eine Art schiefe Ebene angehoben, bevor es sich vor den Abnehmern absetzt und bei der nachfolgenden Umkehrbewegung von der Förderfläche des Mitnehmers in Förderrichtung transportiert wird. Herkömmliche Fördereinrichtungen weisen in der Regel mehrere derartiger Förderstränge mit jeweils in Reihe angeordneten Mitnehmen auf, wobei benachbarte Förderstränge in den meisten Betriebssituationen gegenläufig bewegt werden, d.h. der eine Förderstrang mit zugeordneten Mitnehmern bewegt sich in Förderichtung, während ein direkt benachbarter Förderstrang in Gegenrichtung bewegt wird.

Bei der angegebenen bekannten Fördereinrichtung umfasst ein Förderstrang eine Schub-Zugstange, an welcher in Längsrichtung hintereinander eine Mehrzahl von Mitnehmern starr angeordnet sind, welche als sägezahnförmige Querholme ausgebildet und in Reihe an der Schub-Zugstange befestigt sind. Diese herkömmlichen Schub-Zugstangen-Fördereinrichtungen benötigen eine ebene Unterlage, d.h. ebene Böden, da sich ansonsten Teile wie Holzspäne und Metallteile unter die Mitnehmer schieben und diese nach oben drücken. Derartige hochgebogene Mitnehmer haben zur Folge, dass sich weitere dickere Teile des Schüttgutes unter die Mitnehmer setzen und die Auftriebskraft weiter verstärken, was neben einer verminderten Förderleistung je nach spezieller Gestaltung des Systems auch dazu führen kann, dass die Schub-Zugstangen-Fördereinrichtung schwergängig wird mit der Folge eines unerwünscht hohen Kraftbedarfs und damit eines erhöhten Energiebedarfs für den Antrieb der Einrichtung. Darüber hinaus können sich im Betrieb bei den herkömmlichen Schub-Zugstangen-Fördereinrichtungen im Bereich der Randbegrenzung der einzelnen Schub-Zugstangen mit ihren zugeordneten Mitnehmern innerhalb des Haufwerkes stark ausgeprägte Scherkräfte entwickeln, welche die Fließeigenschaften des Schüttgutes vermindern und welche dann durch hohe Schub-Zugkräfte überwunden werden müssen. Die Austragsleistung der Fördereinrichtung wird hierdurch erniedrigt bzw. erfordert einen höheren Energieaufwand.

Eine weitere Fördereinrichtung ist in der deutschen Gebrauchsmusterschrift DE 20 2009 011 482 U1 beschrieben, wobei die starr mit den Schub-Zugstangen verbundene, prismatisch ausgestalteten Mitnehmer nicht in einem Winkel von 90° zur zugeordneten Schub-Zugstange, sondern Abschnitte der Mitnehmer ausgehend von der lateralen Mitte eines Förderstrangs schräg hierzu angebracht sind.

Eine gattungsbildende Fördereinrichtung ist in der Gebrauchsmusterschrift G 91 14 383.7 offenbart, bei welcher der Förderstrang in Form einer Förderstange ähnlich wie die schon oben erwähnte Schub-Zugstangen-Fördereinrichtung ausgebildet ist.

Der Erfindung liegt die Aufgabe zugrunde, die beschriebenen Nachteile der Fördereinrichtungen gemäß dem Stand der Technik zumindest teilweise zu beheben.

Diese Aufgabe löst die vorliegende Erfindung überraschenderweise schon mit einer Fördereinrichtung mit den Merkmalen von Anspruch 1. Die erfindungsgemäße Fördereinrichtung zeichnet sich dadurch aus, dass ein Mitnehmer an seinen beiden Längsenden im Bereich seiner Längsachse Verbindungselemente aufweist zum Koppeln des Mitnehmers an benachbarte Mitnehmer des Förderstranges.

Die Pfeilform der Mitnehmer der erfindungsgemäßen Fördereinrichtung stellt sicher, dass die Mitnehmer gegenüber den Mitnehmern herkömmlicher Fördereinrichtungen vergleichsweise biegestabil sind. Die durch die Pfeilform bedingte große Wirkfläche an der Oberseite des Mitnehmers erzeugt durch das aufliegende Schüttgut eine vergleichsweise große Auflagekraft. Hierdurch können in vielen Fällen die im Stand der Technik üblichen Niederhalter zum Niederhalten des Förderstranges auf der Bodenfläche vermieden werden. Dadurch, dass die vertikale Erstreckung eines Mitnehmers an seiner Förderseite über seine Quererstreckung abnimmt, wird bei der Bewegung der Mitnehmer nicht nur eine Materialbewegung in Förderrichtung und vertikal, sondern auch eine dritte seitliche Bewegung in Querrichtung zur Förderrichtung verstärkt hervorgerufen, sodass die bei herkömmlichen Fördereinrichtungen auftretenden Haufwerksbereiche, in welchen starke Scherkräfte vorliegen, vermieden werden können.

Bei der erfindungsgemäßen Fördereinrichtung fließt das Schüttgut je nach Bewegungsrichtung der Mitnehmer zunächst in die eine und dann in die andere Richtung. Die angegebene Pfeilform der Mitnehmer hat zur Folge, dass einem entgegen kommenden Mitnehmer in einem benachbarten Förderstrang das Material zugeführt wird, darüber hinaus driftet Material, welches dazu neigt, sich unter den Mitnehmer zu setzen, zur Seite ab. Durch die Pfeilform der Mitnehmer wird in der Regel die höchste Förderleistung in deren Mitte erzeugt, zum Rand der Mitnehmer nimmt die Förderleistung entsprechend ab. Auch hierdurch wird die Gefahr verringert, dass sich Material an den lateralen Enden der Mitnehmer unterschiebt.

Zur Kopplung einer Mehrzahl von Mitnehmern innerhalb eines Förderstrangs ist es vorgesehen, dass ein Mitnehmer an seinen beiden Längsenden im Bereich seiner Längsachse Verbindungselemente aufweist. Diese Verbindungselemente können zur direkten Kopplung der Mitnehmer untereinander ausgebildet sein, es ist jedoch auch möglich, dass zwischen zwei in Reihe angeordneten Mitnehmern ein Zwischenelement, beispielsweise in Form eines kurzen stangenförmigen Elementes angeordnet ist, welches komplementär zu dem bzw. den Mitnehmer-Verbindungselement(en) ausgebildet ist und mit diesem verbindbar ist.

Vorteilhafte Ausführungsformen sind in den Unteransprüchen angeben. Weitere erfindungsgemäße Merkmale ergeben sich auch aus den nachfolgenden Erläuterungen sowie aus der Beschreibung zu den beiliegenden Zeichnungen.

Um die beschriebene seitliche Bewegung des Schüttgutes zu den Mitnehmern zu optimieren, kann vorgesehen sein, dass die vertikale Erstreckung des jeweiligen Mitnehmers an seiner Förderseite, ausgehend von dessen lateralen Mitte über seine Quererstreckung abnimmt, insbesondere kontinuierlich abnimmt. Durch dieses "Auslaufen" der Mitnehmer in Querrichtung werden harte Grenzabschnitte mit starken Scherkräften im Haufwerk zwischen zwei benachbarten Fördersträngen besonders gut vermieden.

Zweckmäßigerweise kann der pfeilförmige Mitnehmer eine etwa dreieckförmige Grundfläche aufweisen, insbesondere in Form eines gleichschenkligen Dreiecks. Diese Gestaltung betont die kompakte Form des Mitnehmers mit den oben stehend angegebenen Vorteilen. Diese Grundfläche entspricht dabei der Unterseite des Mitnehmers. Insbesondere kann ein Mitnehmer eine etwa tetraederförmige Gestalt aufweisen, d.h. die Form eines allgemeinen Vierflächners. Dabei können die Flächen des Tetraeders unterschiedlich sein.

Nicht in jedem Fall muss die gesamte Grundfläche des Mitnehmers auf der Unterlage wie einer Bodenfläche aufliegen. Stattdessen ist es auch möglich, dass die Mitnehmer nur abschnittsweise auf der Unterlage aufliegen, insbesondere mit einem Mittenabschnitt, sodass laterale Endabschnitte der Unterseite des Mitnehmers von der Unterlage abstehen.

Darüber hinaus umfasst die erfindungsgemäße Fördereinrichtung auch Ausführungsformen, bei welchen die Unterlage oder Bodenfläche, auf welcher die Mitnehmer verschiebbar aufliegen, Teil der Fördereinrichtung selbst ist. Dies kann beispielsweise bei solchen Anwendungen der Fall sein, bei welchen der Lagerbereich für das Schüttgut aufgrund seiner Bodenbeschaffenheit, wie seiner Ebenheit kein zuverlässiges Austragen des Schüttgutes ermöglicht. In solchen Fällen kann beispielsweise eine Bodenabdeckung wie eine Blechabdeckung gewählt werden, auf welcher die Mitnehmer wie beschrieben verschiebbar abgeordnet sind. Je nach spezifischer Gestaltung kann diese zusätzliche Bodenabdeckung als Teil bzw. Teile der erfindungsgemäßen Fördereinrichtung oder als zur Fördereinrichtung separates Teil bzw. Teile ausgebildet sein.

Durch eine spezifische Gestaltung der Größe sowie der relativen Lage der verschiedenen Flächen des Mitnehmers kann dieser an die spezifischen Fließeigenschaften des jeweiligen Schüttgutes angepasst werden.

Um die Stabilität des pfeilförmigen Mitnehmers der erfindungsgemäßen Fördereinrichtung zu verbessern, kann vorgesehen sein, dass laterale Kanten des Mitnehmers, an welchen Flächen der Oberseite und Unterseite des Mitnehmers spitz zusammenlaufen, gebrochen gestaltet sind. Dies gilt sowohl bei hohlförmigen Mitnehmern als auch bei Mitnehmern, welche aus einem Vollmaterial gestaltet sind.

Die Flächen eines Mitnehmers können grundsätzlich eben, jedoch auch einen gekrümmten Verlauf aufweisen. Auch die Kanten eines Mitnehmers können gekrümmt verlaufen.

Zweckmäßigerweise ist ein Mitnehmer bezogen auf seine aktiven, zur Bewegung des Schüttgutes vorgesehenen Flächen relativ zu einer Ebene, welche senkrecht zur Unterseite des Mitnehmers und parallel zur Förderrichtung verläuft, spiegelsymmetrisch aufgebaut. Hiervon kann insbesondere bei Mitnehmern vorteilhaft abgewichen werden, welche in einem Randbereich der Fördereinrichtung, beispielsweise in der Nähe einer Wand verlaufen.

Die Kompaktheit eines Mitnehmers einer erfindungsgemäßen Fördereinrichtung wird insbesondere bei einer Gestaltung optimiert, bei welcher die Schnittfläche des Mitnehmers bei einem Schnitt parallel zur Längsachse und senkrecht zur Auflagefläche an der Unterseite mit steigendem Abstand zur Längsachse abnimmt. Zweckmäßigerweise nimmt dabei die Schnittfläche mit steigendem Abstand zur Längsachse bzw. Spiegelebene kontinuierlich ab, insbesondere im Bereich der lateralen Enden des Mitnehmers. Besonders zweckmäßig ist es dabei, wenn die Abnahme dieser Schnittfläche über die gesamte Quererstreckung des Mitnehmers ausgehend von dessen lateralen Mitte vorliegt. Bei einer derartigen Gestaltung des Mitnehmers ist dessen Wirkung im Bereich seiner lateralen Mitte konzentriert und im Bereich seiner Lateralen Enden minimiert. Eine vorzugsweise längliche Form des Mitnehmers kann ferner dafür sorgen, dass dieser im Betrieb nicht seitlich abdreht.

In einer besonders vorteilhaften Gestaltung des pfeilförmigen Mitnehmers kann zur Verstärkung seines kompakten Aufbaus vorgesehen sein, dass laterale Kanten des Mitnehmers an dessen Grundfläche an seinem der Förderseite abgewandten Längsende einen Winkel zwischen 60° und 120°, insbesondere einen Winkel von 90° bilden.

Zur Festlegung der Hubflächen eines Mitnehmers, d.h. der Flächen, welche das Schüttgut bei einer Bewegung des Mitnehmers entgegen der Förderrichtung nach oben bewegen, kann vorgesehen sein, dass die Oberseite des Mitnehmers Schrägflächen zur Vertikalen umfasst, die von lateralen Kanten an der Grundfläche des Mitnehmers bis zur lateralen Mitte kontinuierlich verlaufen. Die jeweiligen Schrägflächen können jeweils insbesondere als ebene, etwa dreieckförmige Fläche ausgebildet sein, wobei in einer weiteren Ausführungsform diese Schrägfläche auch gekrümmt sein kann.

Zur Optimierung der Förderleistung des Mitnehmers der erfindungsgemäßen Fördereinrichtung kann vorgesehen sein, dass der Mitnehmer an seiner Förderseite zwei etwa ebene Förderflächen aufweist, welche sich jeweils von ihrem lateralen Ende bis zur lateralen Mitte des Mitnehmers erstrecken, wobei beide Förderflächen zur Längsachse des Mitnehmers jeweils einen Winkel zwischen 70° und 90°, insbesondere von 80° bilden können. Dabei können beide Förderflächen vorzugsweise etwa dreieckförmig ausgebildet sein, wobei jeweils eine der Flächen auf eine der beiden lateralen Seiten des Mitnehmers angeordnet ist. Die beiden Förderflächen laufen bei dieser Ausführungsform im Bereich der lateralen Mitte des Mitnehmers zusammen und bilden insofern einen Winkel zwischen 140° und 180°. Verlaufen beide Förderflächen in der gleichen Ebene, beträgt der Winkel zwischen diesen 180°, d.h. beide Förderflächen bilden im Falle der oben beschriebenen Ausführungsform mit tetraederförmigem Mitnehmer eine einzelne, dreieckförmige Förderfläche.

Bei einem Mitnehmer der erfindungsgemäßen Fördereinrichtung kann auch die relative Lage der beiden Förderflächen zur Vertikalen für eine Verbesserung der Förderleistung in Abhängigkeit des Schüttgutes eingestellt sein. Dabei hat es sich für eine Vielzahl von Schüttgütern als vorteilhaft herausgestellt, wenn beide Förderflächen des Mitnehmers etwa eben sind und zur Vertikalen jeweils einen Winkel zwischen 0° und 20°, insbesondere 10° aufweisen.

Eine vorteilhafte Kompaktheit eines Mitnehmers bei der erfindungsgemäßen Fördereinrichtung kann auch dadurch hervorgerufen werden, dass der Mitnehmer über den überwiegenden Teil seiner Längserstreckung, insbesondere über seine gesamte Längserstreckung im Bereich seiner lateralen Mitte, die größte vertikale Erstreckung aufweist.

Zweckmäßigerweise können bei der erfindungsgemäßen Fördereinrichtung eine Mehrzahl von Mitnehmern des zumindest einen Förderstrangs gliederartig miteinander verbunden sein, sodass die herkömmlicherweise verwendete starre Schub-Zugstange eines Förderstrangs entfallen kann. Bei der Verwendung einer solchen starren Stange sind bei den herkömmlichen Fördereinrichtungen in der Regel Zwangsführungen in Form von Niederhaltern vorzusehen, die ein "Auftreiben" des Förderstrangs verhindern. Auch diese Zwangsführung kann mit der angegebenen Gestaltung einer gliederartigen Kopplung von mehreren Mitnehmern innerhalb eines Förderstranges in der Regel entfallen, da sich die in Reihe gliederartig gekoppelten Mitnehmer eventuell vorhandenen bzw. im Laufe des Betriebs entwickelnden Bodenunebenheiten anpassen können. Darüber hinaus weist das Vorsehen von gliederartig gekoppelten Mitnehmern zur Gestaltung eines Förderstrangs den Vorteil auf, dass sich die Fertigung als auch die Montage der Fördereinrichtung, beispielsweise zur Gestaltung eines Zugbodens beliebiger Größe, einfacher und kostengünstiger durchführen lässt. Abhängig von der abzudeckenden Förderfläche kann die jeweilige Anzahl von Mitnehmern innerhalb eines Förderstrangs sowie die Mehrzahl derartiger, parallel zueinander angeordneter Förderstränge festgelegt werden. Auf diese Weise kann vor Ort die Fördereinrichtung modulartig zusammengesetzt werden, im Unterschied zu herkömmlichen Fördereinrichtungen, bei welchen es häufig notwendig ist, vor Ort die Mitnehmer an die starre Schub-Zugstange anzuschweißen bzw. die gesamte Fördereinrichtung im Wesentlichen vorzumontieren und mit hohem Aufwand zum Einsatzort zu transportieren.

In bestimmten Ausführungsformen der erfindungsgemäßen Fördereinrichtung kann die Kopplung zwischen zwei innerhalb eines Förderstrangs benachbarten Mitnehmern auch starr erfolgen.

Zweckmäßigerweise kann die Kopplung von zwei innerhalb eines Förderstrangs benachbarten, gliederförmigen Mitnehmern derartig erfolgen, dass diese gekoppelte Mitnehmer zueinander schwenkbar angeordnet sind, wobei die Schwenkachse parallel zu einer durch die Auflagefläche definierten Ebene und senkrecht zur Längsachse der Mitnehmer liegt. Bei einer solchen Gestaltung wird es ermöglicht, dass sich alle Mitnehmer bezüglich ihrer Auflage an lokale, eventuell vorhandene Bodenunebenheiten anpassen können. Durch eine derartige Kopplung von zwei benachbarten Mitnehmern wird ferner vermieden, dass Mitnehmer zueinander seitlich im Betrieb versetzen.

Die angegebene Kopplung zweier benachbarter Mitnehmer innerhalb eines Förderstranges, derartig, dass diese wie beschrieben zueinander schwenkbar angeordnet sind, ist sowohl bei einer direkten Kopplung der Mitnehmer umsetzbar, jedoch auch bei der Verwendung eines schon obenstehend beschriebenen Koppelelementes, wobei dieses Koppelelement mit beiden Mitnehmern jeweils schwenkbar verbunden sein kann, derartig, dass die jeweilige Schwenkachse parallel zu einer durch die Auflagefläche definierte Ebene und senkrecht zur Längsachse der Mitnehmer liegt. Das Verwenden eines solchen Koppelstückes zwischen zwei Mitnehmern erhöht nochmals die Anpassungsfähigkeit aller Mitnehmer an die jeweils vorhandenen, lokalen Bodenunebenheiten des Bodens, auf welchem sich die Fördereinrichtung abstützt.

Es sei darauf hingewiesen, dass bei einer erfindungsgemäßen Fördereinrichtung je nach spezifischer Aufgabenstellung auch vorgesehen sein kann, dass eine Mehrzahl von erfindungsgemäß ausgebildeten Mitnehmern zur Gestaltung eines Förderstranges an einer starren Spurstange hintereinander angeordnet und in ihren Längsachsen zueinander ausgerichtet sein können. Eine solche Ausführungsform entspricht einer Ausführungsform mit gekoppelten Mitnehmern, soweit die Kopplung starr zwischen den einzelnen Mitnehmern erfolgt.

Zweckmäßigerweise umfasst eine erfindungsgemäße Fördereinrichtung nicht nur einen einzigen Förderstrang mit einer Mehrzahl von in Förderrichtung hintereinander angeordneten Mitnehmern, sondern zumindest zwei parallel verlaufende Förderstränge, welche jeweils eine Mehrzahl von in Förderrichtung hintereinander angeordneten und miteinander in Wirkverbindung stehenden Mitnehmern aufweisen. Durch das Vorsehen derartiger parallel zueinander angeordneter Förderstränge ist prinzipiell eine beliebige Förderfläche ausbildbar, innerhalb dessen Schüttgut ausgetragen bzw. eingetragen werden kann.

Zweckmäßigerweise kann vorgesehen sein, dass zwei benachbarte Förderstränge jeweils an einem ihrer Längsenden miteinander gekoppelt sind, wobei das jeweils andere Längsende an einen Antrieb angeschlossen ist, wobei beide Antriebe insbesondere jeweils als reine Zugantriebe oder jeweils als reine Schubantriebe ausgebildet sein können.

Soweit Schubantriebe bei einer Fördereinrichtung verwendet werden, welche Förderstränge mit jeweils einer Mehrzahl von gliederartig miteinander verbundenen Mitnehmern aufweisen, ist es zweckmäßig, wenn eine Zwangsführung für die Mitnehmer vorgesehen ist, damit diese im Betrieb nicht nach oben wegschwenken.

Zur Kopplung zweier benachbarten Förderstränge, welche jeweils an einem Ende durch einen Zugantrieb bewegt werden, können alle denkbaren Kraftübertragungsmittel wie eine Kette, das über ein Zahnrad umgelenkt wird, verwendet werden.

Die Herstellung und Gestaltung eines Mitnehmers einer erfindungsgemäßen Fördereinrichtung kann spezifisch auf das Schüttgut abgestellt werden. Ein solcher pfeilförmiger Mitnehmer kann als Kunststoffteil, insbesondere als Spritzgussteil, jedoch auch andere Materialien wie Holz, Metall oder Verbundwerkstoffe umfassen oder daraus hergestellt sein. Der pfeilförmige Mitnehmer kann dabei auch als Hohl- oder Vollkörper ausgebildet sein.

Besonders vorteilhaft kann ein solcher Mitnehmer als ein aus mehreren Blechteilen zusammengeschweißter Hohlkörper ausgebildet sein, wobei zur Gestaltung der Verbindungselemente sowie zur Verstärkung des Mitnehmers ein etwa mittig zur Längsachse verlaufendes Element wie ein Flach- oder ein Rundstahl verwendet werden kann, das sich über die gesamte Längserstreckung des Mitnehmers und darüber hinaus erstrecken kann und an welchem mehrere Stahlbleche zur Gestaltung des Mitnehmerkörpers bzw. seiner aktiven Flächen, insbesondere seiner Hub- und Förderflächen, angeschweißt sein können.

Die Erfindung wird im Folgenden durch das Beschreiben einiger Ausführungsformen unter Bezugnahme auf die beiliegenden Zeichnungen erläutert, wobei
- Figur 1: in einer Aufsicht eine erfindungsgemäß ausgebildete Fördereinrichtung 1 zum Transport von Schüttgut,
- Figur 2: den rechten Randbereich der in Figur 1 dargestellten Fördereinrichtung 1 in einer perspektivischen Detailansicht,
- Figur 3: einen einzelnen Mitnehmer 100 der Fördereinrichtung 1 in einer perspektivischen Schrägansicht,
- Figur 4: den Mitnehmer 100 gemäß Figur 3 in einer Stirnansicht auf die Förderseite des Mitnehmers,
- Figur 5: den Mitnehmer gemäß Figur 3 in einer Seitenansicht,
- Figur 6: den Mitnehmer 100 gemäß Figur 3 in einer Aufsicht,
- Figuren 7a/b: den Materialfluss in einer erfindungsgemäß ausgebildeten Fördereinrichtung in einer Prinzipdarstellung in einer Seitendarstellung für zwei verschiedene Bewegungsrichtungen der Mitnehmer,
- Figur 8: den Materialfluss in einer erfindungsgemäß ausgebildeten Fördereinrichtung in einer Prinzipdarstellung von oben, und
- Figur 9: den Materialfluss in einer erfindungsgemäß ausgebildeten Fördereinrichtung in einer Prinzipdarstellung mit Blick auf die Förderseite
zeigen.

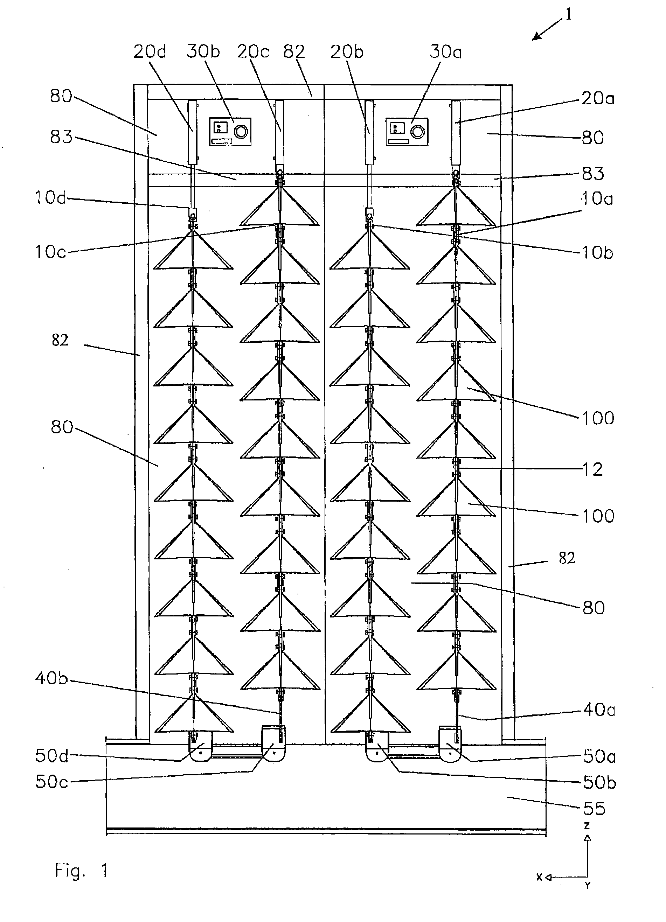

Die Aufsichtdarstellung der Figur 1 zeigt eine erfindungsgemäß ausgebildete Fördereinrichtung, wie sie beispielsweise zum Austragen von Holzhackschnitze aus einem Lagerbereich verwendet werden kann. In der beschriebenen Ausführungsform ist die Einrichtung in einer Lagerbox angeordnet, welche den Boden 80 sowie Wandstrukturen 82, 83 zur Aufnahme des Schüttgutes bereitstellt. Die Bodenfläche kann beispielsweise eine Betonfläche sein, je nach Anwendung ist es jedoch auch möglich, einen solchen Boden mit Metallblechen auszukleiden bzw. zu gestalten, sodass dann die erfindungsgemäße Fördereinrichtung auf diesen Blechen montiert ist.

Gemäß den dargestellten Koordinatenachsen verläuft der Boden 80 in der X-Z-Ebene. Die Fördereinrichtung weist zur Abdeckung dieses Bodenbereiches vier Förderstränge 10a - d auf, welche sich in Förderrichtung, d.h. -Z-Richtung, erstrecken und jeweils eine Mehrzahl von hintereinander angeordneten und miteinander gekoppelten, gliederartigen, d.h. zueinander bewegbaren Mitnehmern 100 aufweisen. Ein solcher Förderstrang erstreckt sich hier im Wesentlichen über die gesamte Ausdehnung der Lagerbox in Förderrichtung.

In der beschriebenen Ausführungsform erfolgt die Kopplung benachbarter Mitnehmer 100 mittels jeweiliger Koppelelemente 12, wobei die Verbindung derartig erfolgt, dass gekoppelte Mitnehmer zueinander beweglich, in der beschriebenen Ausführungsform zueinander kippbar, angeordnet sind, wobei die Drehachse etwa parallel zur X-Achse liegt.

Die pfeilförmig ausgestalteten Mitnehmer 100 sind in der beschriebenen Ausführungsform etwa tetraederförmig ausgebildet, wobei die jeweiligen Dreiecksflächen des Tetraeders nicht symmetrisch sind. Jeder Mitnehmer liegt zumindest abschnittsweise, insbesondere im Mittenbereich mit seiner etwa dreieckförmigen Unterseite auf dem Boden 80 auf und ist zu diesem in Förderrichtung dadurch verschiebbar, dass sein zugeordneter Förderstrang motorisch in ±Z-Richtung bewegt wird. Hierzu ist jeder Förderstrang 10a - 10d an seinem der Förderseite entgegen gesetzten Ende an eine Antriebseinrichtung, in der dargestellten Ausführungsform an einen elektrisch betriebenen Zugzylinder 20a - d angeschlossen.

In der beschriebenen Ausführungsform werden die Förderstränge und damit die Mitnehmer 100 in der Regel auf Zug belastet, jedoch nicht geschoben. Um dies zu erreichen, sind jeweils zwei benachbarte Förderstränge an ihren förderseitigen Enden mittels Zugmittel in Form einer Kette 40a, b und einem Umlenkelement 50a, b kraft- und bewegungsgekoppelt verbunden. Diese Gestaltung ermöglicht es, dass in einer Betriebssituation immer nur einer der beiden Zugzylinder 20a, b bzw. einer der beiden Zugzylinder 20c, d zum Ziehen angesteuert bzw. gespeist wird. Der jeweils andere Zylinder arbeitet nicht, sodass dessen Kolbenstange in Förderrichtung mitgeschleppt wird.

Die beiden, wie beschrieben miteinander gekoppelte Förderstränge werden durch das abwechselnde Ansteuern der beiden Antriebe in Bezug auf die Förderrichtung hin- und herbewegt, wodurch das Austragen des Schüttgutes aus der Lagerbox auf das an der Stirnseite der Fördereinrichtung angeordnete Förderband 55 durchgeführt wird.

Dadurch, dass die Mitnehmer der beschriebenen Ausführungsform grundsätzlich auf Zug belastet sind, können ansonsten übliche, am Boden angeordnete Niederhalter der Mitnehmer grundsätzlich entfallen. Durch die zueinander schwenkbar gekoppelten Mitnehmer können sich diese an jeweilige Unebenheiten auch durch Verkippung anpassen.

In nicht dargestellten Ausführungsformen kann die Kopplung der pfeilförmigen Mitnehmer jedoch auch starr ausgebildet sein, sodass dann nicht in jedem Fall eine mechanische Kopplung zweier benachbarter Förderstränge wie in Figur 1 dargestellt, notwendig ist. In diesem Fall können die jeweiligen Antriebe der Förderstränge zum Aufbringen einer Zugkraft und einer Schubkraft ausgebildet sein, um die notwendige Hin- und Herbewegung des jeweiligen Förderstranges zu bewerkstelligen, eine mechanische Kopplung von zwei benachbarten Fördersträngen kann entfallen.

Ferner sei darauf hingewiesen, dass nicht zwingend die einzelnen Antriebseinrichtungen 20a - d an der Seite eines Förderstranges angeordnet sein müssen, welche der Förderseite gegenüber liegt. Auch die umgekehrte Anordnung, bei welcher die Antriebe am förderseitigen Ende der Förderstränge angreifen, ist denkbar, auch wenn sich dadurch der konstruktive Aufwand erhöht.

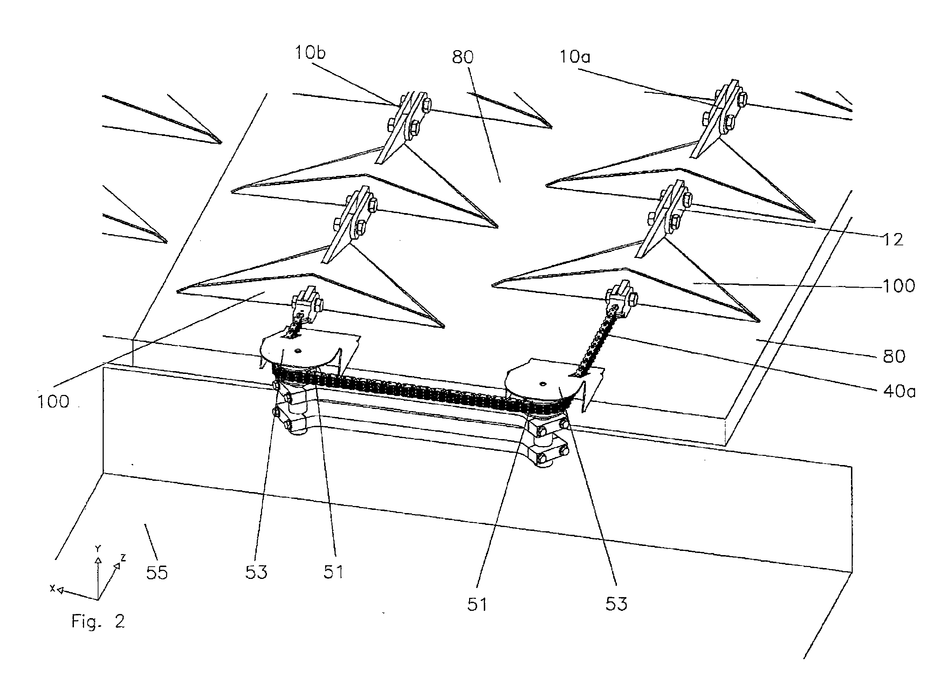

Figur 2 zeigt in einer detaillierteren Ansicht einen Ausschnitt der in Figur 1 dargestellten erfindungsgemäßen Fördereinrichtung, nämlich den rechts unten in Figur 1 dargestellten Abschnitt, in welchem die beiden Förderstränge 10a, 10b über das Zugmittel in Form einer Kette 40a im Bereich der förderseitigen Enden der Stränge gekoppelt sind. Die Kette 40a ist dabei wie gezeigt mittels eines Verbindungselementes, umfassend eine U-förmige gelochten Lasche mit einem förderseitig zum jeweiligen Mitnehmer 100 angeordneten Verbindungselement in Form einer gelochten Lasche dadurch verbunden, dass sich ein gesicherter Bolzen durch alle Lochungen der zugeordneten und zueinander ausgerichteten Verbindungselemente erstreckt.

Die Umlenkelemente 50a, 50b, siehe Figur 1, weisen in der angegebenen Ausführungsform jeweils eine Umlenkrolle 52 für die jeweilige Kette sowie ein Abdeckblech 53 auf.

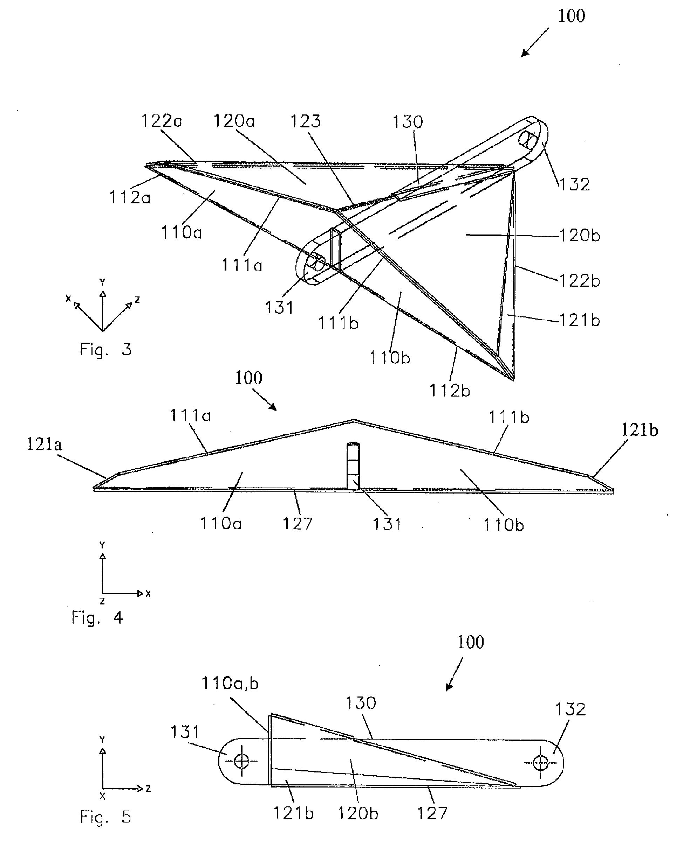

Die im Wesentlichen tetraederförmige Gestalt der Mitnehmer 100, welche insofern eine im Wesentlichen dreieckförmige Grundfläche aufweisen, welche eine Fläche bereitstellen, mit der sich die Mitnehmer am Boden 80 abstützen, wird aus der Darstellung gemäß Figur 2 ersichtlich. Auch die Kopplung benachbarter Mitnehmer 100 eines Förderstrangs in der beschriebenen Ausführungsform geht aus der Figur hervor. Hierzu ragt sowohl am förderseitigen Längsende als auch am entgegen gesetzten Längsende des jeweiligen Mitnehmers eine endstämmig gelochte Lasche 131, 132 als Verbindungselement heraus (siehe Fig. 3), an das ein Koppelelement 12 in Form einer oder mehrerer länglichen Lasche(n) mittels einer Bolzenverbindung befestigt ist, derartig, dass der Mitnehmer 100 relativ zum Koppelelement 12 um eine Achse verkippbar angeordnet ist, welche parallel zur X-Achse verläuft. Bei der beschriebenen Gestaltung der Verbindung zweier benachbarter Mitnehmer können sich somit beide gekoppelten Mitnehmer relativ zum Koppelement 12 um die X-Achse verkippen.

In einer nicht dargestellten Ausführungsform kann auch vorgesehen sein, die Mitnehmer unter Bereitstellung anderer Freiheitsgrade der Mitnehmer zueinander miteinander zu koppeln. Beispielsweise ist es auch möglich, zwischen benachbarten Mitnehmern eine Verbindung vorzusehen, welche einen einzelnen Freiheitsgrad, beispielsweise eine einzelne Verkippungsachse der beiden Mitnehmer zueinander bereitstellt. Hierzu könnte beispielsweise eine der beiden Verbindungselemente eines Mitnehmers als U-förmige gelochte Verbindungslasche ausgebildet sein, in welche die Verbindungslasche des benachbarten Mitnehmers eingefügt und wie in dem beschriebenen Beispiel durch eine Bolzensicherung gesichert wird.

Wie insbesondere aus der Darstellung gemäß Figur 1 ersichtlich, kann durch die gliederartige Zusammensetzung eines einzelnen Förderstranges mittels der Kopplung einzelner Mitnehmer in Reihe und durch das parallele Anordnen mehrerer derartiger Förderstränge eine beliebige Fläche eines Zug-, Schub- bzw. Zug-/Schubbodens abgedeckt werden, um das innerhalb dieser Fläche abgelegte Schüttgut auszutragen.

Die genaue Gestaltung eines Mitnehmers der in den Figuren dargestellten Ausführungsform einer erfindungsgemäßen Fördereinrichtung ist in den Figuren 3 - 6 angegeben. Zweckmäßigerweise sind alle, zumindest die Mehrzahl der Mitnehmer der erfindungsgemäßen Fördereinrichtung identisch ausgestaltet, es ist jedoch möglich, insbesondere in den Randbereichen der Einrichtung anders gestaltete Mitnehmer einzusetzen, um eine Anpassung an die dortigen, unterschiedlichen Verhältnisse in Bezug auf die Fließeigenschaften des Materials durchzuführen.

Figur 3 zeigt einen erfindungsgemäß ausgebildeten Mitnehmer in einer perspektivischen Ansicht. Wie erkennbar, weist der pfeilförmige Mitnehmer eine im Wesentlichen tetraederförmige Gestalt mit im Wesentlichen vier dreieckförmigen Seitenflächen, welche sich auf die Unter- und die Oberseite des Mitnehmers verteilen. Der Mitnehmer ist in der beschriebenen Ausführungsform spiegelsymmetrisch zu einer Ebene ausgebildet, die in seiner Längsachse, welche mit der Förderrichtung -Z zusammenfällt und etwa senkrecht auf der Bodenfläche 127 des Mitnehmers verläuft, siehe Figur 4. In der beschriebenen Ausführungsform ist der Mitnehmer aus Metall hergestellt, wobei ein Verstärkungselement 130 in Form eines Flachstahls verwendet ist, an welchen die die Begrenzungsflächen der pfeilförmigen bzw. tetraederförmigen Gestalt bereitstellenden Bleche angeschweißt sind. Wie aus der Figur 3 hervorgeht, verläuft die Spiegelsymmetrieebene des dargestellten Mitnehmers etwa mittig durch das Verstärkungselement 130.

Zur Beförderung des Schüttgutes in Förderrichtung -Z weist der Mitnehmer an seiner Förderseite zwei ebene Förderflächen 110a, b auf, welche in der angegebenen Ausführungsform zueinander einen Winkel von etwa 0° bilden, d.h. sie liegen in einer Ebene und bilden im Wesentlichen ein gleichschenkliges Dreieck. Beide Flächen verlaufen etwa senkrecht zur Längsachse Z des Mitnehmers, wie aus Figur 5 hervorgeht. Beide Förderflächen 110a, b können demnach zusammen als eine der vier Grundflächen der tetraederförmigen Gestalt des Mitnehmers angesehen werden. Zwei weitere Flächen des Tetraeders werden durch die beiden Hubflächen 120a, b bereitgestellt, über welche das Schüttgut bei der Bewegung des Mitnehmers entgegen der Förderrichtung nach oben gleitet und nach Erreichen der lateralen Kanten 111a, 111b in Förderrichtung vor die Förderflächen 110a, b fällt. Die vierte Fläche des Tetraeders wird durch die Bodenfläche 127 bereitgestellt, welche im Wesentlichen auch dreieckförmig ausgebildet ist, siehe die Figuren 3 und 4.

Da die Flächen 120a und 127 bzw. 120b und 127 spitz aufeinander zulaufen und ein Mitnehmer im Bereich der sich ergebenden Schnittkante keinen starken Belastungen widerstehen könnte, ist dieser Bereich in der beschriebenen Ausführungsform abgekantet, sodass sich jeweils eine zweite Hubfläche 121a, 121a ergibt, welche sehr viel kleiner als die (Haupt-)Hubflächen 120a, 120b sind. In einer nicht dargestellten, erfindungsgemäßen Ausführungsform können diese zweiten Hubflächen 121a, b auch eine Größe aufweisen, welche etwa der Größe der Hubflächen 120a, b entspricht oder gar größer sein.

In der beschriebenen Ausführungsform schneiden sich die beiden äußeren lateralen Kanten 122a, 122a unter einem Winkel von etwa 90° am Längsende des Mitnehmers 100, welches der Förderseite gegenüberliegt.

An der Förderseite verläuft die vertikale Erstreckung des Mitnehmers 100, d.h. in Y-Richtung, über einen überwiegenden Bereich seiner Quererstreckung abnehmend, im vorliegenden Beispiel ausgehend von der Verbindungskante der Hubflächen 123 kontinuierlich abnehmend bis zu seinem lateralen Ende. In dem angegebenen Beispiel ist die vertikale Erstreckung, d.h. die Höhe des Mitnehmers am größten in seiner lateralen Mitte, siehe Fig. 4.

Zur Befestigung zweier benachbarter Mitnehmer aneinander ragt in der beschriebenen Ausführungsform das Verstärkungselement 130 sowohl an der Förderseite des Mitnehmers als auch an der gegenüber liegenden Längsseite aus dem Mitnehmer heraus und stellt damit zwei Verbindungslaschen 131, 132 bereit, welche gelocht sind. Diese Lochung dient der mit Bezug auf Figur 2 beschriebenen Kopplung mittels des Koppelelements 12.

Figur 4 zeigt den Mitnehmer gemäß Figur 3 in einer Stirnansicht in Richtung zur Förderseite des Mitnehmers. Figur 5 stellt eine Seitenansicht dar, senkrecht zu seiner Längsachse und in Richtung auf die Hubfläche 120b.

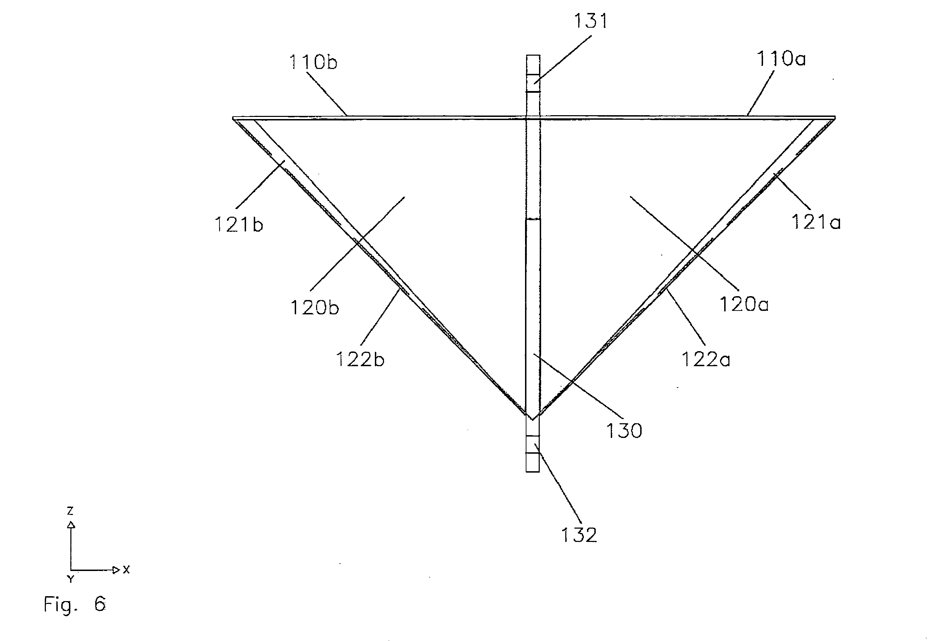

Figur 6 zeigt den Mitnehmer in einer Aufsicht um die prinzipiell dreieckförmigen Hubflächen 120a, 120b der im Wesentlichen tetraederförmigen Gestalt des Mitnehmers wiederzugeben.

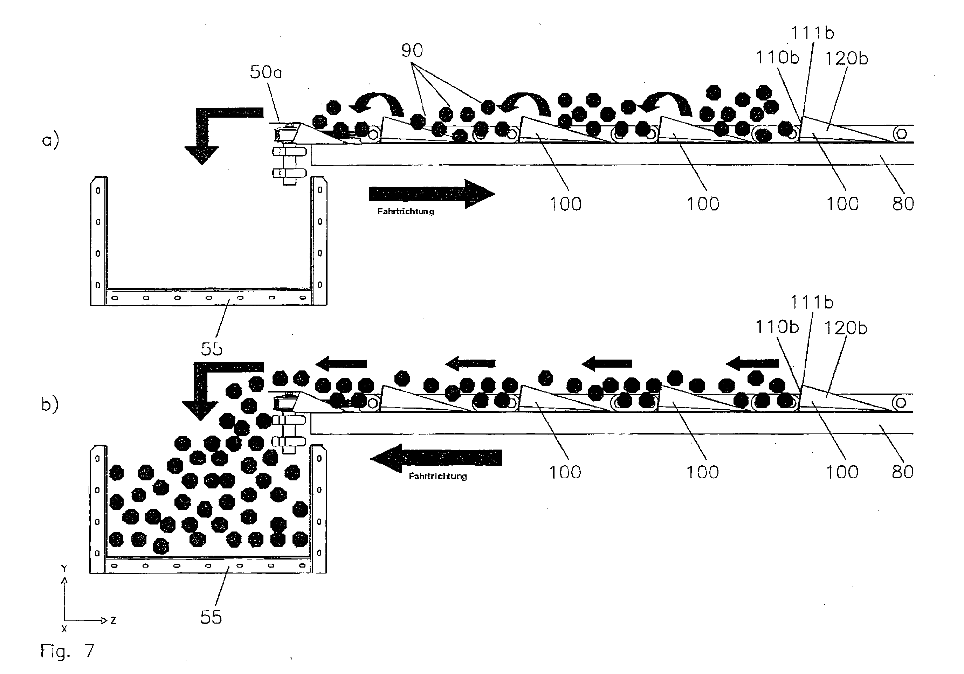

Die Erzeugung des Materialflusses zum Austragen des Schüttgutes durch die erfindungsgemäß ausgebildete Fördereinrichtung wird mit Bezug auf die nachfolgenden Figuren 7a, a bis 9 beschrieben. Die Figuren 7a, b zeigen die erfindungsgemäße Fördereinrichtung in einer Schnittebene, welche die Förderrichtung -Z sowie die vertikale Achse Y enthält. Dabei ist der Schnitt so ausgeführt, dass dieser nicht zentrisch durch einen Förderstrang verläuft, sondern außerhalb der Längsachse des Förderstrangs, d.h. außerhalb der Symmetrieebene der Mitnehmer. Insofern zeigen der Schnitt durch die Mitnehmer Schnittlinien durch Flächen auf einer Seite der Mitnehmer, hier der Förderfläche 10b sowie der Hubfläche 120b. In der in Figur 7 a, b dargestellten Ausführungsform sind die Förderflächen 110a, b etwas zur Vertikalen geneigt. Die Mitnehmer sind jedoch ansonsten wie die in den Figuren 3 - 6 gezeigten Mitnehmer aufgebaut.

Figur 7a zeigt die Situation, bei welcher der dargestellte Förderstrang entgegen der Förderrichtung entsprechend dem dargestellten Bewegungspfeil bewegt wird. Da sich die Mitnehmer mit ihren Hubflächen unter das Schüttgut 90, hier Holzhackschnitze bewegen, werden diese über die gezeigte Hubfläche 120b nach oben bis zur oberen lateralen Kante 111b bewegt, wonach sie dann an der Förderseite der Mitnehmer herunterfallen, was durch die an der Kante dargestellten Pfeile symbolisiert ist. Nachfolgend wird die Bewegungsrichtung umgekehrt, diese Situation zeigt Figur 7b. Das Schüttgut wird in dieser Betriebsphase von der Förderfläche 10b erfasst und in Förderrichtung transportiert. Gleiches gilt natürlich auch für die andere, nicht gezeigte laterale Seite der Mitnehmer mit der entsprechenden Hubfläche 120a bzw. der entsprechenden Förderfläche 110a.

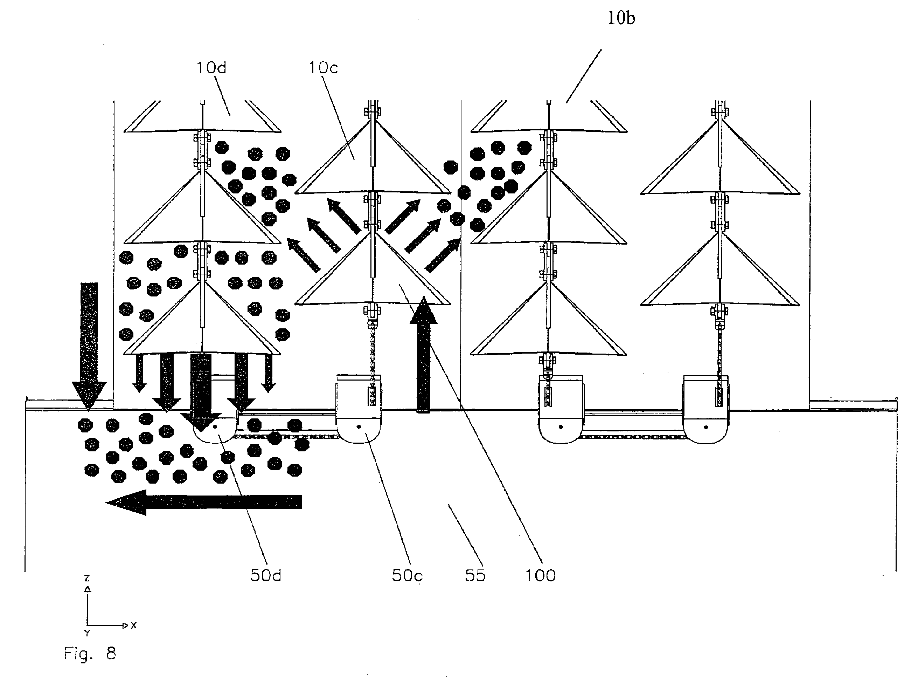

Während in den Figuren 7a, b die Bewegung der Schüttgutteilchen in der Schnittebene, d.h. einer YZ-Ebene zeigt, ist die Bewegung der Schüttgutteilchen in Figur 8 innerhalb der Bodenebene XZ dargestellt. Dabei ist eine Situation gezeigt, bei welcher der Förderstrang 10c entgegen der Förderrichtung 1 sowie der Förderstrang 10d in Förderrichtung bewegt wird. Aufgrund der Pfeilform des Mitnehmers führt der mit dem Bezugszeichen 100 versehene Mitnehmer des Förderstrangs 10c einem entgegenkommenden Mitnehmer des parallelen Förderstranges 10b zu, wodurch sich die Förderleistung erhöht. Material, was sich ansonsten unter den Mitnehmer setzen würde, driftet zur Seite ab.

Aufgrund der länglichen Form der Mitnehmer der erfindungsgemäßen Fördereinrichtung drehen diese seitlich kaum ab. Ein Verhältnis der gesamten lateralen Ersteckung zur Längserstreckung des pfeilförmigen Mitnehmers von etwa zwei hat sich für viele Einsatzzwecke in Bezug auf die Förderleistung und die Standzeit als vorteilhaft herausgestellt.

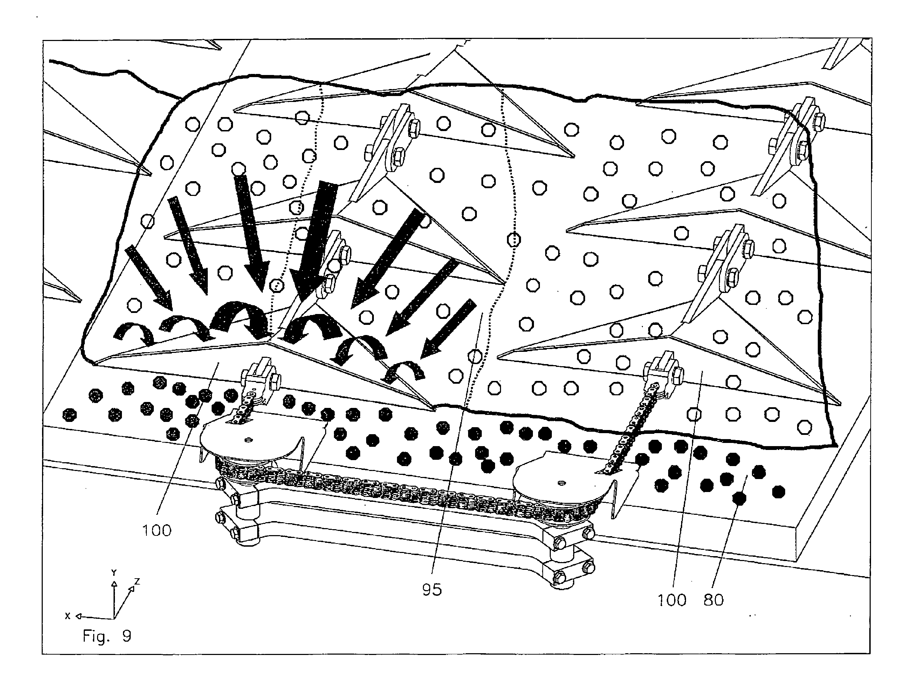

Figur 9 zeigt eine erfindungsgemäß gestaltete Fördereinrichtung in einer Schnittdarstellung, wobei der Schnitt in der YX-Ebene liegt. Die angegebenen Bewegungspfeile zeigen die Bewegung der Teilchen im Schüttgut innerhalb des Haufwerks 95 in dieser Ebene.

Die Bewegung der Teilchen im Haufwerk wird durch die pfeilförmige Gestalt der Mitnehmer in alle drei Raumrichtungen bewirkt, insofern entstehen im Haufwerk keine starken Scherkräfte, welche das Austragen des Schüttgutes erschweren könnten. Wie mit den unterschiedlichen Pfeillängen bzw. - dicken angedeutet, ist die Förderleistung im Bereich der lateralen Mitte der Mitnehmer am größten, während sie zu ihren lateralen Enden immer weiter abnimmt. Die im Haufwerk 95 verursachte vorteilhafte Bewegung der Schüttgutteilchen ist wie beschrieben im Wesentlichen auf die besondere geometrische Gestaltung der Mitnehmer zurückzuführen.

Die geometrische Gestaltung der Mitnehmer, insbesondere die jeweilige Anordnung der verschiedenen beschriebenen aktiven Flächen eines Mitnehmers zueinander kann auf die spezifischen physikalischen Eigenschaften des jeweiligen Schüttgutes optimiert werden.

### Bezugszeichenliste

- 1: Fördereinrichtung
- 10a-d: Förderstrang
- 12: Koppelelement
- 13: Bolzenverbindung
- 20a-d: Elektrisch betriebener Zugzylinder
- 30a,b: Speiseaggregat für Zugzylinder
- 40a,b: Zugmittel, Kette
- 50a-d: Umlenkelement
- 51: Rolle
- 53: Abdeckung
- 54: Verbindungselement
- 55: Förderband
- 80: Boden
- 82: Wandung
- 83: Wandung
- 90: Holzhackschnitze
- 95: Haufwerk
- 100: Mitnehmer
- 110a,b: Förderfläche
- 111a,b: Obere laterale Kante der Förderfläche
- 112a,b: Untere lateral Kante der Förderfläche
- 120a,b: Hubfläche
- 121a,b: Hubfläche
- 122a,b: Untere laterale Kante der Hubfläche
- 123: Verbindungskante der Hubflächen
- 127: Bodenfläche
- 130: Verstärkungselement
- 131: Verbindungslasche
- 132: Verbindungslasche
- X,Y,Z: Koordinatenachsen
- -Z: Förderrichtung

## Patentansprüche

1. Fördereinrichtung (1) zum Transport von Schüttgut (95) umfassend einen Antrieb zum Hin- und Herbewegen von zumindest einem Förderstrang (10 a-d), über eine Bodenfläche (80) in Bezug auf die Förderrichtung (-Z), wobei der zumindest eine Förderstrang (10 a-d) eine Mehrzahl von in Förderrichtung hintereinander angeordneten und miteinander in Wirkverbindung stehenden Mitnehmern (100) aufweist, und ein Mitnehmer eine Oberseite und eine Unterseite aufweist, wobei die Unterseite eine Auflagefläche (127) bereitstellt, mit welcher der Mitnehmer (100) auf der Bodenfläche (50) auflegbar ist und die Oberseite des Mitnehmers zumindest eine Förderfläche (110a, b) zum Fördern des Schüttgutes in Förderrichtung umfasst, und die vertikale Erstreckung des Mitnehmers in Längsrichtung (Z) hin zu seiner Förderseite zumindest abschnittsweise zunimmt, wobei ein Mitnehmer (100) eine pfeilförmige Gestalt aufweist, und die vertikale Erstreckung eines Mitnehmers an seiner Förderseite über einen überwiegenden Bereich seiner Quererstreckung abnimmt, **dadurch gekennzeichnet, dass** ein Mitnehmer (100) an seinen beiden Längsenden im Bereich seiner Längsachse Verbindungselemente (131, 132) aufweist zum Koppeln des Mitnehmers an benachbarte Mitnehmer des Förderstranges (10a - d).

2. Fördereinrichtung (1) nach Anspruch 1, **dadurch gekennzeichnet, dass** die Unterseite des Mitnehmers als etwa dreieckige Grundfläche ausgebildet ist, insbesondere in Form eines gleichschenkligen Dreiecks.

3. Fördereinrichtung (1) nach Anspruch 1 oder 2,
**dadurch gekennzeichnet, dass** ein Mitnehmer (100) eine etwa tetraederförmige Gestalt aufweist.

4. Fördereinrichtung (1) nach Anspruch 1, 2 oder 3,
**dadurch gekennzeichnet, dass** lateralen Kanten (122a, b), an welchen Flächen der Oberseite und Unterseite des Mitnehmers (100) zusammenlaufen, gebrochen gestaltet sind.

5. Fördereinrichtung (1) nach einem der Ansprüche 1 bis 4, **dadurch gekennzeichnet, dass** die Schnittfläche des Mitnehmers (100) bei einem Schnitt parallel zur Längsachse und senkrecht zur Auflagefläche (127) mit steigendem Abstand zur Längsachse abnimmt.

6. Fördereinrichtung (1) nach einem der Ansprüche 1 bis 5, **dadurch gekennzeichnet, dass** laterale Kanten (122a, 122b) des Mitnehmers (100) an seinem der Förderseite abgewandten Längsende einen Winkel zwischen 60° und 120°, insbesondere 90° bilden.

7. Fördereinrichtung (1) nach einem der Ansprüche 1 bis 6, **dadurch gekennzeichnet, dass** die Oberseite des Mitnehmers (100) Schrägflächen (120a, b, 121a, b) zur Vertikalen umfasst, die von lateralen Kanten (122a, 122b) bis zur lateralen Mitte des Mitnehmers ansteigend verlaufen.

8. Fördereinrichtung (1) nach einem der Ansprüche 1 bis 7, **dadurch gekennzeichnet, dass** ein Mitnehmer (100) über den überwiegenden Teil seiner Längserstreckung, insbesondere über seine gesamte Längserstreckung im Bereich der lateralen Mitte die größte vertikale Ersteckung aufweist.

9. Fördereinrichtung (1) nach einem der Ansprüche 1 bis 8, **dadurch gekennzeichnet, dass** zur Förderseite des Mitnehmers (100) zwei etwa ebene Förderflächen (110a, b) vorgesehen sind, welche sich jeweils etwa von ihren lateralen Ende bis zur etwa lateralen Mitte des Mitnehmers erstrecken.

10. Fördereinrichtung (1) nach Anspruch 9, **dadurch gekennzeichnet , dass** beide Förderflächen (110a, b) zur Vertikalen jeweils einen Winkel zwischen 0° und 20°, insbesondere 10° aufweisen.

11. Fördereinrichtung (1) nach einem der Ansprüche 1 bis 10, **dadurch gekennzeichnet, dass** Mitnehmer (100) eines Förderstranges (10 a-d) gliederartig miteinander gekoppelt sind.

12. Fördereinrichtung (1) nach einem der Ansprüche 1 bis 11, **dadurch gekennzeichnet, dass** zwei innerhalb eines Förderstrangs (10a - d) benachbarte und gekoppelte Mitnehmer (100) zueinander bewegbar, insbesondere schwenkbar angeordnet sind.

13. Fördereinrichtung (1) nach Anspruch 12, **dadurch gekennzeichnet**, **das**s zwischen zwei Mitnehmer (100) zur Kopplung in einem Förderstrang ein langgestrecktes Koppelstück (12) vorgesehen ist, das jeweils an einem Längsende schwenkbar mit einem der beiden Mitnehmer (100) verbunden ist, wobei die Schwenkachse jeweils etwa parallel zu einer durch die Auflagefläche definierten Ebene und etwa senkrecht zur Längsachse der Mitnehmer liegt.

14. Fördereinrichtung (1) nach einem der Ansprüche 1 bis 13, **dadurch gekennzeichnet, dass** ein Mitnehmer (100) ein etwa mittig zur Längsachse verlaufendes Verstärkungselement (130), insbesondere einen Flachstahl oder Rundstahl aufweist, das sich über die gesamte Längserstreckung des Mitnehmers hinaus erstreckt und an welchen mehrere flächige Elemente wie Stahlbleche zur Gestaltung des Mitnehmerkörpers befestigt, insbesondere angeschweißt sind.

15. Fördereinrichtung (1) nach einem der Ansprüche 1 bis 14, **dadurch gekennzeichnet, dass** ein Förderstrang eine Spurstange aufweist, an welcher in Förderrichtung hintereinander eine Mehrzahl von mit ihren Längsachsen zueinander ausgerichteten Mitnehmern angebracht sind.

16. Fördereinrichtung (1) nach einem der Ansprüche 1 bis 15, **gekennzeichnet durch** zumindest zwei parallel verlaufende Förderstränge (10a, b; 10c, d), welche jeweils eine Mehrzahl von in Förderrichtung gliederartig hintereinander angeordneten und miteinander in Wirkverbindung stehenden Mitnehmern (100) aufweisen.

17. Fördereinrichtung (1) nach Anspruch 16, **dadurch gekennzeichnet, dass** zwei benachbarte Förderstränge (10a, b; 10c, d) jeweils an einem Längsende miteinander gekoppelt sind, und das andere Längsende jeweils an einen Antrieb angeschlossen ist.

18. Fördereinrichtung (1) nach Anspruch 17, **dadurch gekennzeichnet, dass** zwei Förderstränge (10a, b; 10c, d) mittels eines umgelenktes Zugmittels (40 a, b) wie einer Kette miteinander bewegungsgekoppelt sind.

## Claims

1. Conveyor device (1) for transporting bulk goods (95), comprising a driving mechanism for moving to and fro at least one conveyor line section (10a-d) over a bottom surface (80) relative to said conveyor device (-Z), wherein said at least one conveyor line section (10a-d) comprises a plurality of catches (100) arranged one behind the other in the conveying direction and operatively connected to each other, and a catch presenting an upper face and a lower face, wherein said lower face provides a supporting surface (127) with which the catch (100) can be applied to the bottom area (50), and the upper face of the catch comprising at least one conveying surface (110a, b) for conveying the bulk goods in the conveying direction, and wherein the vertical extension of the catch in the longitudinal direction (Z) increases towards the conveying side thereof at least in sections, wherein a catch (100) has an arrow-like configuration, and wherein the vertical extension of a catch at the conveying side thereof decreases over a major part of its transverse extension, **characterized in that** a catch (100) comprises on its longitudinal ends in the region of its longitudinal axis connecting elements (131, 132) for coupling the catch to neighboring catches of the conveyor line section (10a-d).

2. Conveyor device (1) according to claim 1, **characterized in that** the lower face of the catch is configured as an approximately triangular base area, particularly in the form of an isosceles triangle.

3. Conveyor device (1) according to claim 1 or 2, **characterized in that** a catch (100) has an approximately triangular pyramid shape.

4. Conveyor device (1) according to claim 1, 2 or 3, **characterized in that** lateral edges (122a, b) at which surfaces of the upper face and lower face of the catch (100) converge are configured in a broken manner.

5. Conveyor device (1) according to one of the claims 1 to 4, **characterized in that** the intersection of the catch (100) at a section parallel to the longitudinal axis and vertical to the supporting surface (127) decreases with an increasing distance to the longitudinal axis.

6. Conveyor device (1) according to one of the claims 1 to 5, **characterized in that** lateral edges (122a, 122b) of the catch (100) on its longitudinal end turned away from the conveying side form an angle of between 60° and 120°, particularly 90°.

7. Conveyor device (1) according to one of the claims 1 to 6, **characterized in that** the upper face of the catch (100) includes inclined surfaces (120a, b, 121 a, b) to the vertical, said inclined surfaces extending in a manner increasing from lateral edges (122a, 122b) up to the lateral center of the catch.

8. Conveyor device (1) according to one of the claims 1 to 7, **characterized in that** a catch (100) presents its largest vertical extension over the major part of its longitudinal extension, particularly over its entire longitudinal extension in the region of the lateral center.

9. Conveyor device (1) according to one of the claims 1 to 8, **characterized in that** to the conveying side of the catch (100) are provided two approximately plane conveying surfaces (110a, b), which respectively extend from their approximate lateral ends to the approximate lateral center of the catch.

10. Conveyor device (1) according to claim 9, **characterized in that** both conveying surfaces (110a, b) respectively present an angle of between 0° and 20°, particularly 10°, to the vertical.

11. Conveyor device (1) according to one of the claims 1 to 10, **characterized in that** catches (100) of a conveyor line section (10a-d) are coupled to each other in a chain link-like manner.

12. Conveyor device (1) according to one of the claims 1 to 11, **characterized in that** two neighboring and coupled catches (100) within a conveyor line section (10a-d) are arranged in a manner so as to movable and particularly pivotable to each other.

13. Conveyor device (1) according to claim 12, **characterized in that** for coupling within one conveyor line section an elongate coupling element (12) is provided between two catches (100), which is respectively pivotably coupled at one longitudinal end thereof to one of said two catches (100), wherein the pivot axis is approximately parallel to a plane defined by said supporting surface and approximately vertical to the longitudinal axis of the catches.

14. Conveyor device (1) according to one of the claims 1 to 13, **characterized in that** a catch (100) includes a reinforcing element (130) extending approximately centrally to the longitudinal axis, in particular flat steel or rounded steel, which extends beyond the entire longitudinal extension of the catch and two which several planar elements such as steel sheets are fixed, particularly by welding, for forming the catch body.

15. Conveyor device (1) according to one of the claims 1 to 14, **characterized in that** a conveyor line section includes a tie bar to which a plurality of catches are attached one behind each other in the conveying direction, with their longitudinal axes aligned to each other.

16. Conveyor device (1) according to one of the claims 1 to 15, **characterized by** at least two parallel running conveyor line sections (10a, b; 10c, d), which each comprise a plurality of catches (100) arranged behind each other in a chain-like manner in the conveying direction and operatively connected to each other.

17. Conveyor device (1) according to claim 16, **characterized in that** two neighboring conveyor line sections (10a, b; 10c, d) are coupled to each other at one longitudinal end respectively and that the other longitudinal end is respectively connected to a driving mechanism.

18. Conveyor device (1) according to claim 17, **characterized in that** two conveyor line sections (10a, b; 10c, d) are motionally coupled by means of a looped-around traction mechanism (40a, b) such as a chain.

## Revendications

1. Dispositif de transport (1) destiné au transport de produits en vrac (95), comprenant un mécanisme de commande pour faire des allers-retours avec au moins une ligne de transport (10a-d) à travers d'une surface de fond (80) par rapport au dispositif de transport (-Z), ladite au moins une ligne de transport (10a-d) comportant une pluralité d'entraîneurs (100) disposés à la file dans la direction de transport et étant en liaison fonctionnelle les uns avec les autres, et l'entraîneur respectivement présentant une face supérieure et une face inférieure, la face inférieure présentant une surface de support (127) avec laquelle l'entraîneur (100) peut être placé sur la surface de fond (50), et la face supérieure de l'entraîneur comprenant au moins une surface de transport (110a, b) pour transporter les produits en vrac dans la direction de transport, et l'étendue verticale de l'entraîneur augmentant, au moins en sections, dans la direction verticale (Z) vers son côté de transport, l'entraîneur (100) respectivement ayant une forme de flèche, et l'étendue verticale d'un entraîneur sur son côté de transport se diminuant sur une partie majeure de son étendue transversale, **caractérisé en ce qu'**un entraîneur (100) comporte sur ses deux extrémités longitudinales et dans la zone de son axe longitudinale des éléments de couplage (131, 132), pour coupler l'entraîneur aux entraîneurs voisins de la ligne de transport (10a-d).

2. Dispositif de transport (1) selon la revendication 1, **caractérisé en ce que** la face inférieure de l'entraîneur est formée comme une surface de base presque triangulaire, notamment en forme d'un triangle isocèle.

3. Dispositif de transport (1) selon la revendication 1 ou 2, **caractérisé en ce que** l'entraîneur (100) a une forme approximative d'un tétraèdre.

4. Dispositif de transport (1) selon la revendication 1, 2 ou 3, **caractérisé en ce que** des bords latéraux (122a, b), auxquels convergent des surfaces de la face supérieure et de la face inférieure de l'entraîneur (100), sont configurés d'une manière rompue.

5. Dispositif de transport (1) selon l'une des revendications 1 à 4, **caractérisé en ce qu'**à une coupure parallèle à l'axe longitudinal et verticale par rapport à la surface de support (127), la coupe de l'entraîneur (100) diminue avec la croissance de la distance à l'axe longitudinal.

6. Dispositif de transport (1) selon l'une des revendications 1 à 5, **caractérisé en ce que** des arêtes latérales (122a, 122b) de l'entraîneur (100) à son extrémité détournée du côté de transport forment un angle d'entre 60° et 120°, notamment de 90°.

7. Dispositif de transport (1) selon l'une des revendications 1 à 6, **caractérisé en ce que** la face supérieure de l'entraîneur (100) comporte des surfaces inclinées (120a, b, 121 a, b) par rapport à la verticale, lesdites surfaces inclinées s'étendant de manière montante des arêtes latérales (122a, 122b) jusqu'au centre latéral de l'entraîneur.

8. Dispositif de transport (1) selon l'une des revendications 1 à 7, **caractérisé en ce qu'**un entraîneur (100) présente la plus grande étendue verticale sur sa partie majeure de son étendue longitudinale et notamment sur son étendue longitudinale totale dans la zone du centre latéral.

9. Dispositif de transport (1) selon l'une des revendications 1 à 8, **caractérisé en ce que** sont prévues, vers le côté de transport de l'entraîneur (100), deux surfaces de transport à peu près plaines (110a, b), chacune desquelles s'étendant à peu près de son extrémité latérale jusqu'à peu près le centre latéral de l'entraîneur.

10. Dispositif de transport (1) selon la revendication 9,**caractérisé en ce que** les deux surfaces de transport (110a, b) respectivement présentent un angle d'entre 0° et 20°, notamment de 10°, par rapport à la verticale.

11. Dispositif de transport (1) selon l'une des revendications 1 à 10, **caractérisé en ce que** des entraîneurs (100) d'une ligne de transport sont couplés les uns aux autres à la façon de mailles.

12. Dispositif de transport (1) selon l'une des revendication 1 à 11, **caractérisé en ce que**, dans une ligne de transport (10a-d), des entraîneurs (100) voisins et couplés sont disposés de manière mobile et notamment de manière pivotante les uns par rapport aux autres.

13. Dispositif de transport (1) selon la revendication 12, **caractérisé en ce qu'**entre deux entraîneurs (100) est prévu un élément de couplage allongé (12) pour la couplage dans une ligne de transport, l'élément de couplage étant, sur son extrémité longitudinale respective, relié de manière pivotante à l'un des deux entraîneurs (100), l'axe de pivotement respectif étant à peu près parallèle à un plan défini par la surface de support et à peu près verticale à l'axe longitudinal des entraîneurs.

14. Dispositif de transport (1) selon l'une des revendications 1 à 13, **caractérisé en ce qu'**un entraîneur (100) comporte un élément de renforcement (130) s'étendant à peut près centralement par rapport à l'axe longitudinal, notamment un acier plat ou un acier rond, et s'étendant au-delà de l'étendue longitudinale totale de l'entraîneur, et auquel sont fixés et notamment soudés plusieurs éléments de grande étendue telles que les tôles en acier, pour former le corps de l'entraîneur.

15. Dispositif de transport (1) selon l'une des revendications 1 à 14, **caractérisé en ce qu'**une ligne de transport comporte une barre de direction sur laquelle sont disposés plusieurs entraîneurs à la file dans la direction de transport et avec ses axes longitudinaux étant orientés les uns aux autres.

16. Dispositif de transport (1) selon l'une des revendications 1 à 15, **caractérisé par** au moins deux lignes de transport (10a, b; 10c, d) parallèles, chacune comportant plusieurs entraîneurs (100) disposés à la file et à la façon de mailles et étant en liaison fonctionnelle les uns avec les autres.

17. Dispositif de transport (1) selon la revendication 16, **caractérisé en ce que** deux lignes de transport (10a, b; 10c, d) voisines sont respectivement couplées les unes aux autres sur une extrémité longitudinale, et **en ce que** l'autre extrémité longitudinale est respectivement connectée à un mécanisme de commande.

18. Dispositif de transport (1) selon la revendication 17, **caractérisé en ce que** deux lignes de transport (10a, b; 10c, d) sont couplées en mouvement au travers d'un mécanisme de traction de renvoi (40a,b) telle qu'une chaîne.
